# EUROPEAN PATENT SPECIFICATION

(11) **EP 2 466 354 B1**
(45) Date of publication and mention of the grant of the patent: **16.03.2016**
(21) Application number: 12158426.2
(22) Date of filing: 13.05.2009
(51) Int. Cl.: G02B 6/46, G02B 6/44, G02B 6/50

(54) **An optical fibre telecommunication cable**
Lichtwellenleiter-Telekommunikationskabel
Câble de télécommunication à fibre optique

(30) Priority: 13.05.2008 FR 0802571
(43) Date of publication of application: 20.06.2012
(62) Divisional of application: 09006460.1
(73) Proprietor: Draka Comteq B.V., 1083 HJ Amsterdam (NL)
(72) Inventor: Bonicel, Jean-Pierre, 92500 Rueil Malmaison (FR); Chapelet, Franck Pierre-Michel, 60000 Beauvais (FR)
(74) Representative: Algemeen Octrooi- en Merkenbureau B.V.

(56) References cited:
- EP-A1- 1 591 814
- DE-A1- 3 923 543
- GB-A- 2 215 081

## Description

The present invention relates to the field of optical fibre telecommunication cables. The invention proposes a telecommunication cable in urban conduits which are particularly suitable when the cable comprises a large number of micromodules.

In a manner known *per se,* a telecommunication cable comprises a plurality of optical fibres which can be grouped together in micromodules or in loose tubes. A micromodule can contain approximately 2 to 24 fibres, wrapped together in a thin, flexible retaining jacket. A loose tube contains a plurality of fibres loosely arranged in a tube which can be made of thermoplastic resin for example. The retaining jacket of the micromodules or the tubes and the jackets of the optical fibres can be coloured in order to facilitate identification of the fibres in the cable, for example during a by-pass operation. The micromodules or the tubes can be loosely arranged in the central cavity of the cable, as described in the document WO-A-01/98810, or be braided helically around a central supporting member or also be wound in S-Z strands, as described in the documents WO-A-2004/074899, US-A-5 229 851 or FR-A-2 677 774. Documents EP1591814 A1 and DE 3923543 A1 disclose a telecommunication cable comprising a plurality of optical fibres grouped together in micro-cables held around a central reinforcing element, each micro-cable comprising:
- a plurality of optical fibres gathered together in micromodules or in loose tubes;
- a watertight polymer jacket;
- at least one longitudinal reinforcing element.
In is context, the central cavity receiving the micromodules is called the core of the cable; this central cavity is surrounded by a jacket. The cable jacket can be made of polymer, generally polyethylene; it can be extruded in-line when the cable is produced, as the fibres are grouped together in micromodules.

In a manner known *per* se, the cable jacket can contain reinforcing elements arranged longitudinally. The jacket is in fact constituted by a material which is watertight but not very rigid mechanically and sensitive to variations in temperature. The reinforcing elements thus act to limit deformations of the cable caused by tensile stresses, for example while laying the cable in a conduit, and to limit axial deformations of the cable under compression and expansion when subjected to significant variations in temperature, by compensating for the compressive or expansion stresses induced by the jacket. In fact, optical fibre telecommunication cables are generally intended to be laid in the conduits of metropolitan transmission systems over distances of more than 1000 metres. In order to allow the cable to be laid in the conduits, it must have both a certain strength to tolerate traction and the mechanical stresses of laying and a certain flexibility in at least one direction of bending in order to allow its insertion in the conduits of the system. Moreover, a telecommunication cable must generally tolerate conditions of use over a wide range of temperature varying from -40°C to +60°C, which can cause expansion and compression in the cable jacket. The reinforcing elements of the cable make it possible to absorb the mechanical stresses to which the cable is subjected during laying in the conduit and thus protect the optical fibres arranged in the cable.

The telecommunication cables installed in urban conduits must also resist rodents and corrosion; an armouring, for example made of steel, inserted in the internal periphery of the jacket can ensure protection of the cable in an aggressive environment such as sewers.

With the development of optical fibre telecommunications systems all the way to the subscriber, known under the acronym FTTH for "Fiber To The Home" or FTTC for "Fiber To The Curb", it is sought to produce high-capacity cables containing a large number of optical fibres, i.e. several hundred fibres.

Typically, during the installation of a telecommunications network, a main high-capacity cable connects a telephone exchange to a main splicing manhole entered on the one hand by the main cable and on the other hand by a plurality of lower-capacity secondary cables for arborescent distribution of the optical signals towards secondary splicing manholes. By splicing manholes is meant an area allowing an operator access to the conduits in which the telecommunication cables are installed; such a manhole is generally situated underground and allows interconnection of the cables of a telecommunications network.

In the main manhole, it is necessary to splice each optical fibre of the main cable to a fibre of one of the secondary cables. It is common for the main telecommunication cable to contain several hundred fibres. Therefore, several hundred splicings are to be carried out by an operator in the main splicing manhole. The main splicing manhole therefore contains a large, relatively bulky splicing box and there is a not insignificant risk that certain splices will be defective. The fibre to fibre connection in the main splicing manhole cannot be carried out by several operators in parallel as the splicing manholes are small and do not allow work to be carried out simultaneously by several operators. The splicing operation in the main splicing manhole therefore takes a long time. Moreover, each splice must then be checked by backscattering. If certain splices prove defective, verifications should then be carried out among the hundreds of splices in the main splicing manhole. Such a verification operation takes a long time and is tedious to carry out.

A need therefore exists for a telecommunication cable which has a high capacity, several hundred fibres, and which allows a distribution of the optical signal through an arborescent telecommunication network by limiting the number of splices.

The main telecommunication cable, containing several hundred fibres, is introduced through the main splicing manhole and pulled towards the telephone exchange on one side. An additional length of cable is provided, corresponding at least to the distance separating the main splicing manhole from the most distant secondary splicing manhole. The cable jacket is then stripped off to release micro-cables arranged in the main cable, each micro-cable being intended to be introduced into a conduit of the telecommunication network linking the main splicing manhole to a secondary splicing manhole. Each micro-cable has the structure of a cable, namely a central core accommodating a plurality of optical fibre micromodules, a protective jacket compatible with an installation in an external environment and reinforcing elements. The micro-cables can be wound in S-Z strands in the main cable then separated from each other at the main splicing manhole to be pulled towards each secondary splicing manhole. There is thus a physical continuity of the optical fibres between the telephone exchange and the secondary manholes. The invention makes it possible to eliminate the splices in the main splicing manhole. This results in time saving and a reduction in the installation costs of a metropolitan optical telecommunication network.

A method for the installation of a telecommunication cable according to the present invention, the cable comprising a plurality of optical fibres grouped together in micro-cables held around a central reinforcing element, comprises the steps of:
- installing the cable from a main splicing manhole towards a point of introduction of an optical signal, in such a manner that an overlength of cable remains available after installation of the cable at the main splicing manhole;
- separating the micro-cables over the remaining overlength of cable;
- installing at least one micro-cable from the main splicing manhole towards a secondary splicing manhole.

The method can comprise one or more of the following characteristics:
- the micro-cables are held in S-Z strands around the central reinforcing element;
- the micro-cables are held in S-Z strands around the central reinforcing element by an outer jacket;
- the micro-cables are separated by stripping away the jacket over the overlength of cable by pulling at least one cord arranged longitudinally in the jacket;
- the micro-cables are held in S-Z strands around the central reinforcing element of the cable by ties;
- the micro-cables separated from the overlength of cable are each coiled in a figure-of-eight in proximity to the main splicing manhole;
- the optical fibres are not spliced in the main splicing manhole;
- the overlength of cable is comprised between 30 metres and 2000 metres;
- the overlength of cable is greater than or equal to the distance separating the main splicing manhole from the most distant secondary splicing manhole.

The telecommunication cable according to the invention comprises a plurality of optical fibres grouped together in micro-cables held around a central reinforcing element. Each micro-cable comprises:
- a plurality of optical fibres gathered together in micromodules or in loose tubes;
- a watertight polymer jacket;
- at least one longitudinal reinforcing element.

According to an embodiment, each micro-cable can moreover comprise a corrugated steel armouring arranged in the inner periphery of the jacket.

According to the embodiments, the micro-cables are held in S-Z strands around the central reinforcing element by a polymer jacket surrounding the micro-cables and/or by ties. The cable jacket can comprise at least one cord arranged longitudinally. The cable can also comprise a corrugated steel armouring arranged in the inner periphery of the jacket.

The cable of the invention can comprise more than 500 optical fibres, each micro-cable comprising more than 100 optical fibres.

Other advantages and features of the invention will become apparent on reading the following description of an embodiment of the invention, given by way of example and with reference to the attached drawings which show:
- Figure 1, a diagram in cross-section of a cable according to the invention;
- Figure 2, a diagram of a first step of the implementation of the installation method;
- Figure 3, a diagram of a second step of the implementation of the installation method;
- Figure 4, a diagram of a third step of the implementation of the installation method.

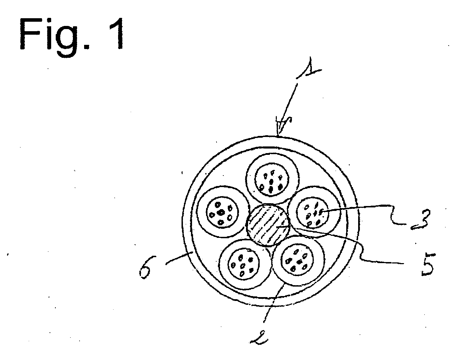

A cable for the implementation of the installation method according to the invention will be described with reference to Figure 1.

The cable 1 of Figure 1 has a central longitudinal cavity receiving a plurality of micro-cables 2 wound in S-Z strands around a central reinforcing element 5. The reinforcing element can be a GRP (glass-reinforced plastic) rod, or a stranded galvanized steel rod or a plastic rod reinforced with aramid or any other appropriate longitudinal reinforcing element for stiffening a telecommunication cable. The cable 1 of Figure 1 also comprises a jacket 6 surrounding the micro-cables 2. The jacket 6 can be made of polymer, for example high density polyethylene, polyolefin or polyamide; it presents a good watertightness, has a low coefficient of friction and a certain mechanical flexibility appropriate for laying in a conduit. The cable's longitudinal water-tightness can be ensured by special viscous products or products which swell in the presence of water or by a combination of these two types of products. An armouring (not illustrated) constituted by a corrugated steel ribbon can be arranged in the inner periphery of the jacket 6 and form a protection against corrosion and rodents when the cable 1 is intended to be laid in an aggressive external environment, such as sewers for example.

Each micro-cable 2 constitutes a cable which in itself is compatible with installation in an external conduit. Thus, each micro-cable comprises a jacket which presents a good watertightness, which is made of polymer for example, optionally an armouring for protection against corrosion and/or rodents and at least one reinforcing element which is central or concealed in the jacket. Each micro-cable comprises a plurality of optical fibres which can be grouped together in micromodules 3 or in loose tubes. The micromodules or tubes can be arranged loose in the central cavity of each micro-cable or be wound helically or in S-Z strands. The longitudinal watertightness of each micro-cable can be ensured by special viscous products or swelling products of the same type as those used for the main cable 1.

As each micro-cable 2 has a structure compatible with installation in an external environment, the cable 1 may not have an outer jacket 6; the protection of the optical fibres being ensured by the jacket of each micro-cable 2. The micro-cables 2 must then be held around the central reinforcing element 5 by ties, such as aramid or polyester ties. The absence of jacket 6 on the cable 1 makes it possible to reduce production costs, but it is however preferable to provide a jacket 6 surrounding the micro-cables 2 for better support of the latter and to facilitate installation in a conduit.

For the installation of telecommunication cables in an urban network, in particular for FTTH or FTTC type applications, it is sought to use high-capacity cables in order to connect a maximum number of subscribers. For example, the cable of Figure 1 can be a cable of 720 optical fibres distributed among five micro-cables of 144 fibres each. It is however understood that the cable 1 can comprise more or less than five micro-cables and that each micro-cable 2 can comprise more or less than 144 fibres.

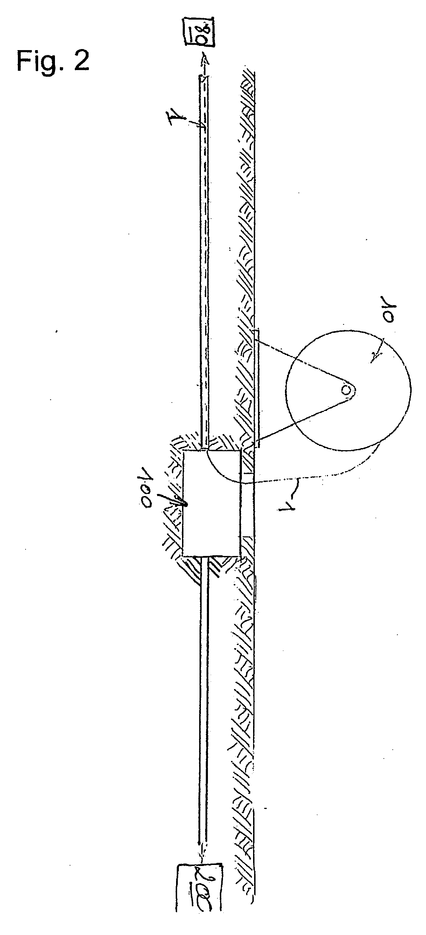

Figure 2 illustrates a first step of the installation method for a telecommunication cable as described with reference to Figure 1.

The cable 1 is unwound from a cable drum 10 placed on the road at a main splicing manhole 100. By main splicing manhole is meant a splicing manhole entered by a cable 1 directly linking a point of introduction of an optical signal into a telecommunication network such as a telephone exchange. The cable 1, comprising several hundred fibres, is therefore unwound from the cable drum 10 and installed in a conduit between the main manhole 100 and a telephone exchange identified by the arrow and the box 80 in Figure 2. The installation of the cable to the telephone exchange can be implemented according to any known technique, for example a so-called "push and pull" technique, a so-called blowing technique, a floating technique or any other technique which may be suitable depending on the shape of the conduit and the distance to be covered. The distance between the main manhole 100 and the telephone exchange 80 can be of the order of approximately 1000 metres.

The distance between the main manhole 100 and secondary manholes can be comprised between 30 metres and 2000 metres; it is more typically of the order of 300 to 500 metres. By secondary manhole is meant a splicing manhole entered by a cable connecting another splicing manhole. The secondary splicing manhole can be one of the nodes of the telecommunication system or a final point of interconnection with a subscriber network.

Once the cable 1 is installed in a conduit as far as the telephone exchange 80, an overlength of cable 1 remains available on the cable drum 10 at the main splicing manhole. The overlength of cable must be at least equal to the largest distance separating the main splicing manhole from each secondary manhole, i.e. 300 m to 500 m. It is understood that a smaller or greater overlength can be provided depending on the applications.

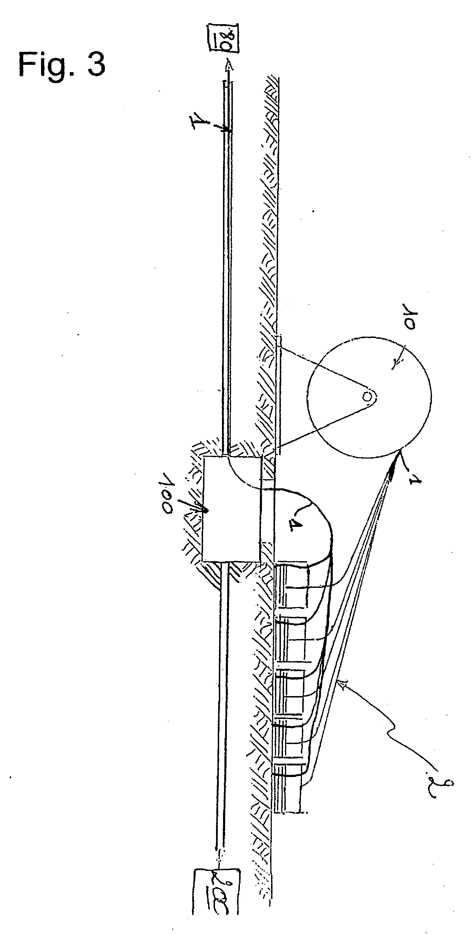

Figure 3 illustrates a second step of the installation method for a telecommunication cable comprising five micro-cables as described with reference to Figure 1.

The micro-cables 2 are separated from each other over the overlength of cable remaining on the cable drum 10 after installation of a first portion of cable towards the telephone exchange. Figure 3 thus shows on the one hand the cable 1 already installed in a conduit and on the other hand five micro-cables 2 separated from the cable as the cable drum 10 is unwound and each stored in temporary cases. In fact, no cutting of fibres is carried out at the main splicing manhole 100, thus no splicing is carried out at the main splicing manhole 100.

If the cable 1 does not comprise any jacket 6, the micro-cables 2 are separated from each other by cutting the tie which holds them around the central reinforcing element 5 then unwinding the cable drum 10. If the cable 1 comprises an outer jacket 6, the jacket of the overlength of cable is then stripped off in order to extract the micro-cables 2. The stripping of the jacket 6 of the cable can be carried out by cutting the jacket around its circumference in order to get to at least one rip-cord (not illustrated) arranged longitudinally in the jacket then pulling on the cord as the cable drum 10 is unwound. It is preferable to use two cords diametrically opposite each other in order to ensure a regular stripping of the jacket.

The micro-cables are preferably wound in S-Z strands around the central reinforcing element 5. This arrangement makes it possible to hold the micro-cables together until the stripping of the jacket or breaking of the tie and progressively separate them from each other by separating them from the central reinforcing element 5 when the cable drum 10 is unwound. A helical assembly of the micro-cables would not allow a separation of the micro-cables at the point of stripping off the outer jacket. The assembly of the micro-cables 2 in S-Z strands around the central reinforcing element 5 can be held simply by means of the outer polymer jacket 6 surrounding the micro-cables 2 when it exists or be held using ties, such as polyester, aramid or other ties; such holding ties can be used with or without the outer jacket 6.

The micro-cables 2 thus separated can be coiled in a figure-of-eight in proximity to the main splicing manhole 100, as they are extracted from the cable 1 while the cable drum 10 unwinds. The winding in S-Z strands in the cable 1 then facilitates the separation and therefore the arrangement in a figure-of-eight of the extracted micro-cables. Figure 3 thus shows the micro-cables 2 stored temporarily in proximity to the main splicing manhole 100 before being themselves installed in a conduit. It is in fact difficult to progressively introduce all the micro-cables into their respective conduits as only one operator can work inside the main manhole 100 and a single operator cannot, by himself, supervise the installation of five cables simultaneously. The temporary arrangement in a figure-of-eight of the micro-cables 2 extracted from the cable 1 makes it possible to store a great length of cable without introducing twisting stresses on the micromodules or tubes of fibres since the torsion stresses are cancelled out by the reciprocal figure-of-eight loops.

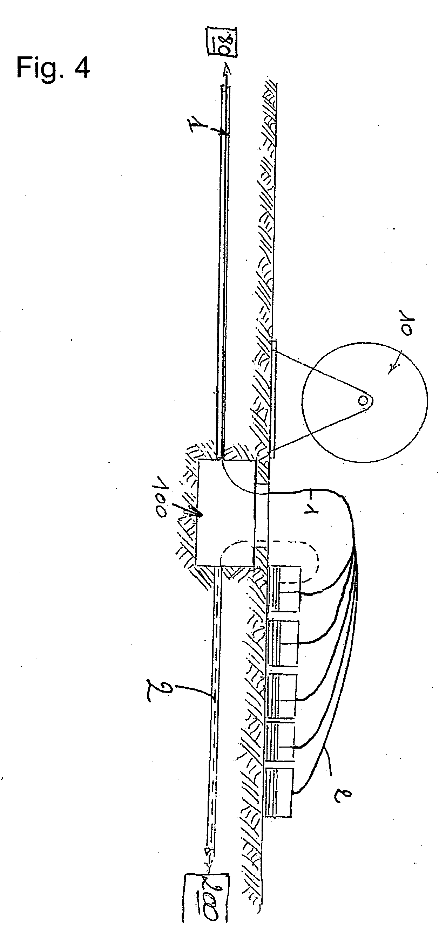

Figure 4 illustrates a third step of the installation method for a telecommunication cable comprising five micro-cables as described with reference to Figure 1.

Each micro-cable 2 can then be installed between the main manhole 100 and a secondary manhole 200 identified by the arrow and the case 200 in Figure 4. Figure 4 shows the installation of one of the micro-cables. The installation of each micro-cable towards a secondary manhole (dotted line in Figure 4) can be implemented according to any one of the abovementioned known technique, such as a so-called "push and pull", blowing, floating or other technique, since each micro-cable has the properties required for installation in an external conduit. It is understood that one or more micro-cables 2 can remain stored in the main manhole 100 if the number of micro-cables in the main cable 1 is greater than the number of secondary manholes to be connected.

The invention thus proposes, starting with a single cable comprising a plurality of micro-cables, to connect from a main splicing manhole on the one hand a point of injection of the optical signal and on the other hand a secondary splicing manhole. Therefore, all splicing of fibres at the main splicing manhole is eliminated. The costs of installation are reduced. Moreover, checking the splices is carried out at the secondary manholes which contain a smaller number of splices; the identification of a defective splice is easier in a secondary manhole than in a main manhole of the prior art. Moreover, several operators can work simultaneously in several different secondary manholes. The commissioning time is reduced.

## Claims

1. A telecommunication cable (1) comprising a plurality of optical fibres grouped together in micro-cables (2) held around a central reinforcing element (5), each micro-cable (2) comprising:
- a plurality of optical fibres gathered together in micromodules or in loose tubes;
- a watertight polymer jacket;
- at least one longitudinal reinforcing element, wherein
each micro-cable also comprises a corrugated steel armouring arranged in the inner periphery of the jacket.

2. The cable according to claim 1, in which the micro-cables (2) are held in S-Z strands around the central reinforcing element (5) by a polymer jacket (6) and/or by ties surrounding the micro-cables.

3. The cable according to claim 2, in which the jacket (6) comprises at least one cord arranged longitudinally.

4. The cable according to claim 2 or 3, further comprising a corrugated steel armouring arranged in the inner periphery of the jacket (6).

5. The cable according to one of claims 1 to 4, comprising more than 500 optical fibres, each micro-cable comprising more than 100 optical fibres.

6. The cable according to one of claims 1 to 5, wherein said jacket is made from high density polyethylene, polyolefin or polyamide.

7. The cable according to one of claims 1 to 6, wherein said at least one longitudinal reinforcing element is central in said micro-cable (2).

8. The cable according to one of claims 1 to 6, wherein said at least one longitudinal reinforcing element is concealed in said jacket of said micro-cable (2).

## Patentansprüche

1. Telekommunikationskabel (1) mit mehreren optischen Fasern, die zu um ein zentrales Verstärkungselement (5) gehaltenen Mikrokabeln (2) gruppiert sind, wobei jedes Mikrokabel (2) umfasst:
- mehrere optische Fasern, die in Mikromodulen oder in Hohladern zusammengefasst sind;
- eine wasserdichte Hülle aus Polymer;
- wenigstens ein longitudinales Verstärkungselement,
wobei jedes Mikrokabel ferner eine geriffelte Stahlarmierung umfasst, die im Innenumfang der Hülle angeordnet ist.

2. Kabel nach Anspruch 1, wobei die Mikrokabel (2) durch eine Hülle (6) aus Polymer und/oder durch die Mikrokabel umgebende Bänder als S-Z-Litzen um das zentrale Verstärkungselement (5) gehalten sind.

3. Kabel nach Anspruch 2, wobei die Hülle (6) mindestens eine longitudinal angeordnete Leine umfasst.

4. Kabel nach Anspruch 2 oder 3, wobei das Kabel ferner eine geriffelte Stahlarmierung umfasst, die im Innenumfang der Hülle (6) angeordnet ist.

5. Kabel nach einem der Ansprüche 1 bis 4, wobei das Kabel mehr als 500 optische Fasern und jedes Mikrokabel mehr als 100 optische Fasern umfasst.

6. Kabel nach einem der Ansprüche 1 bis 5, wobei die Hülle aus Niederdruckpolyethylen, Polyolefin oder Polyamid hergestellt ist.

7. Kabel nach einem der Ansprüche 1 bis 6, wobei das wenigstens eine longitudinale Verstärkungselement mittig im Mikrokabel (2) ist.

8. Kabel nach einem der Ansprüche 1 bis 6, wobei das wenigstens eine longitudinale Verstärkungselement in der Hülle des Mikrokabels (2) verborgen ist.

## Revendications

1. Câble de télécommunications comprenant une pluralité de fibres optiques groupées en micro-câbles (2) maintenus autour d'un élément de renfort central (5), chaque micro-câble (2) comprenant :
- une pluralité de fibres optiques rassemblées en micromodules ou en tubes libres ;
- une gaine en polymère étanche à l'eau ;
- au moins un élément de renfort longitudinal, dans lequel
chaque micro-câble comprend en outre une armure en acier strié disposée en périphérie intérieure de la gaine.

2. Câble selon la revendication 1, dans lequel les micro-câbles (2) sont maintenus en brins S-Z autour de l'élément de renfort central (5) par une gaine polymère (6) et/ou des liens entourant les micro-câbles.

3. Câble selon la revendication 2, dans lequel la gaine (6) comprend au moins un filin disposé longitudinalement.

4. Câble selon la revendication 2 ou 3, comprenant en outre une armure en acier strié disposée en périphérie intérieure de la gaine (6).

5. Câble selon l'une des revendications 1 à 4, comprenant plus de 500 fibres optiques, chaque micro-câble comprenant plus de 100 fibres optiques.

6. Câble selon l'une des revendications 1 à 5, dans lequel ladite gaine est constituée de polyéthylène, de polyoléfine ou de polyamide de grande densité.

7. Câble selon l'une des revendications 1 à 6, dans lequel ledit au moins un élément de renfort longitudinal est central dans ledit micro-câble (2).

8. Câble selon l'une des revendications 1 à 6, dans lequel ledit au moins un élément de renfort longitudinal est caché dans ladite gaine dudit micro-câble (2).
